# EUROPEAN PATENT APPLICATION

(11) **EP 2 830 017 A1**
(43) Date of publication of application: **28.01.2015**
(21) Application number: 13764932.3
(22) Date of filing: 11.03.2013
(51) Int. Cl.: G06Q 50/10

(54) **METHOD FOR PROVIDING AN ONLINE GAME ENABLING THE USER TO CHANGE THE SHAPE OF AN ITEM AND A SYSTEM THEREOF**

(30) Priority: 19.03.2012 KR 20120027960
(71) Applicant: Neowiz Bless Studio Corporation, Seongnam-si, Gyeonggi-do 463-870 (KR); Neowiz Games Co., Ltd., Gyeonggi-do 463-870 (KR)
(72) Inventor: LEE, Jae Kang, Seongnam-si Gyeonggi-do 463-874 (KR)
(74) Representative: Kuhnen & Wacker
(86) International application number: PCT/KR2013/001953
(87) International publication number: WO 2013/141510

(57) **Abstract**

An online game providing method being performed by an online game providing server, the online game providing server being coupled at least one game client through a network and providing an online game based on a virtual character and an item being applied to the virtual character to the at least one game client. The present invention propose to an online game providing method that supports a change for an item appearance to the item being applied to a virtual character according to user's needs to variously decorate the item appearance being worn by the virtual character and to differentiate his or her own virtual character with other virtual characters through unique decoration in a virtual space.

## Description

### [Technical Field]

The present invention relates to a game providing technique and more particularly, to an online game providing method and system that provides an customized appearance change for a corresponding item according to a request for a user to a virtual item.

### [Background Art]

An online game online has developed according as a computing device and a network environment has developed. The online game has developed due to a difference of a conventional offline game and the difference includes cooperation between online game users.

An initial online game mainly includes MORPG(Multiplayer Online Role Playing Game) like game and various online games appear according to a broad network bandwidth and a computing device development.

Such online games typically use a virtual character representing a user as a game progressing object and applying a specific item to a virtual character to provide a game.

In such online games, an appearance of the virtual character performs a role on a game user so that applying various individuality for the virtual character is important. That is, desires for expressing an individuality of the virtual character and for rejecting a de-individuation of the virtual character were demanded.

In the above, a conventional online game has developed various techniques supporting an appearance change for the virtual character itself. The Korean Publication Patent No. 2005-0011120 disclose the conventional online game techniques that support variety of the virtual character itself. The Korean Publication Patent No. 2005-0011120 provides an avatar shape forming procedure and an avatar makeup procedure shaped through changing a vector component composing face elements according to a characteristic of face elements.

However, such conventional techniques support various changes for the virtual character itself but are limited not supporting a change for other item appearance being worn by a virtual character. In the above, individuation for an appearance of the virtual character is achieved but an item appearance being applied to the virtual character is possible only a de-individual expression so the conventional techniques are limiting user's needs for a change for an appearance of the virtual character.

### [Disclosure]

Embodiments of the present invention propose to an online game providing method that supports a change for an item appearance to the item being applied to a virtual character according to user's needs to variously decorate the item appearance being worn by the virtual character and to differentiate his or her own virtual character with other virtual characters through unique decoration in a virtual space.

Embodiments of the present invention propose to an online game providing method that provides a change for the item appearance that applies various functions necessary for mending an actual cloth and providing actual interface cutting or mending a cloth to provide an additional interest for the change of the item appearance to user.

Embodiments of the present invention propose to an online game providing method that automatically changes the item appearance according to the appearance of the virtual character to conveniently perform a change for the item appearance.

In some embodiment, an online game providing method being performed by an online game providing server, the online game providing server being coupled at least one game client through a network and providing an online game based on a virtual character and an item being applied to the virtual character to the at least one game client. The online game providing method includes (a) providing appearance information for at least one item and editing means for the at least one item to a first game client and (b) reconfiguring an appearance of the at least one item by changing an appearance object of the at least one item or re-mapping texture of the appearance object according to change information received through the editing means.

In one embodiment, the editing means may include a cutting module cutting at least area of the appearance of the at least one item, a length change module shortening or lengthening at least area of the appearance of the at least one item in a uniform proportion and an adjustment module adjusting at least area of the appearance of the at least one item into a specific shape.

In one embodiment, the step (b) may include assigning a drawing effect based on a center of a specific point to change an appearance object of a corresponding item when the change information including the drawing effect based on the center of the specific effect is requested and re-mapping a texture of the corresponding item based on the changed appearance object of the corresponding item.

In one embodiment, the step (b) may include checking whether the change information includes a adjusting request for a specific shape of the at least one item through the adjustment module, changing the appearance object of a corresponding item such that the changed appearance object is mapped with at least of the specific shape when the change information includes the adjusting request for the specific shape and re-mapping a texture of the corresponding item based on the changed appearance object.

In one embodiment, the step (b) may include checking whether the change information includes a length change request for the at least one item through the length change module, shortening or lengthening the appearance object of the at least one item according to the length change request with the uniform proportion along a length change direction when the change information includes the length change request for the at least one item and adjusting the texture of the at least one item through shortening or lengthening the appearance object with the uniform proportion to re-map the changed texture for the shortened or lengthened appearance object.

In one embodiment, the step (b) may include checking whether the change information includes a cut request for the at least one item through the cutting module, removing at least area of the appearance object of the at least one item according to the cut request when the change information includes the cut request for the at least one item and re-mapping a texture of the at least one item for the cut appearance object.

In one embodiment, the online game providing method may further include (c) determining whether at least one item reconfigured according to the change information overlaps at least area of the appearance object of the virtual character and if then, recovering the reconfigured appearance to an original appearance.

In one embodiment, the step (c) may include otherwise, texture-mapping an appearance of the reconfigured at least one item and an appearance of the virtual character in order.

In one embodiment, the step (c) may further includes selectively or preferentially displaying the appearance object of a high priority item or a texture being mapped in the appearance object based on a priority for at least two items related with the overlapping area when the mutually overlapping area exists.

In one embodiment, the step (c) may include displaying the appearance object of the high priority item and the texture being mapped in the appearance object for the overlapping area, displaying an appearance object of a low priority item and a texture being mapped in the appearance object for an area without overlapping and removing a display for an appearance object of a low priority item and a texture being mapped in the appearance object for the overlapping area.

In some embodiment, an online game providing server providing an online game, the online game providing server being coupled at least one game client through a network and providing an online game based on a virtual character and an item being applied to the virtual character to the at least one game client. The online game providing server includes an item database, an object change unit and an appearance change control unit. The item database stores appearance information for a plurality of items being worn by the virtual character. The object change unit changes an appearance object of the specific item according to the change information received from the at least one game client. The appearance changing control unit provides an appearance editing means changing the appearance of the at least one item to the at least one game client and to provide the inputted change information to the object change unit through the appearance editing means.

In one embodiment, the object change unit may include a cutting module cutting at least area of the appearance of the specific item, a length change module shortening or lengthening at least area of the appearance of the item in a uniform proportion and an adjustment module adjusting at least area of the appearance of the item into a specific shape.

In one embodiment, the online game providing server may further include a texture mapping unit increasing or decreasing to re-map according to the changed appearance object.

In one embodiment, the appearance change control unit may include providing the change information to the object change unit or texture mapping unit to change the appearance of the specific item and providing appearance information of the changed item through the appearance editing means to the at least one game client.

In some embodiment, a storage medium records a program for performing an online game providing method. The program correspond to being coupled at least one game client through a network and providing an online game based on a virtual character to the coupled at least one client and the program may include (a) a function of providing an editing means for appearance information of at least one item selected by a first game client and an appearance of the at least one item and (b) a function of changing the appearance object of the at least one item according to change information received through the editing means or re-mapping a texture being re-mapped the appearance object to reconfigure the appearance of the at least one item.

An online game providing method and related technologies may support a change for an item appearance to the item being applied to a virtual character according to user's needs to variously decorate the item appearance being worn by the virtual character and differentiate his or her own virtual character with other virtual characters through unique decoration in a virtual space.

An online game providing method and related technologies may provide a change for the item appearance that applies various functions necessary for mending an actual cloth and providing actual interface cutting or mending a cloth to provide an additional interest for the change of the item appearance to user.

An online game providing method and related technologies may automatically changes the item appearance according to the appearance of the virtual character to conveniently perform a change for the item appearance.

### [Description of Drawings]

FIG. 1 is a diagram illustrating an online game providing server and a game client according to an example embodiment of the present invention.
FIG. 2 is a block diagram illustrating one embodiment of an online game providing server.
FIG. 3 is a diagram illustrating another embodiment of an online game providing server.
FIG. 4 through FIG. 11 are diagrams illustrating various item editing procedures and various item editing effects.
FIG. 12 is a flowchart illustrating one embodiment of an online game providing method.
FIG. 13 is a flowchart illustrating another embodiment of an online game providing method.
FIG. 14 is a flowchart illustrating the other embodiment of an online game providing method.

### [Mode for Invention]

Explanation of the present invention is merely an embodiment for structural or functional explanation, so the scope of the present invention should not be construed to be limited to the embodiments explained in the embodiment. That is, since the embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

Terms described in the present disclosure may be understood as follows.

While terms such as "first" and "second," etc., may be used to describe various components, such components must not be understood as being limited to the above terms. The above terms are used only to distinguish one component from another. For example, a first component may be referred to as a second component without departing from the scope of rights of the present invention, and likewise a second component may be referred to as a first component.

It will be understood that when an element is referred to as being "connected to" another element, it can be directly connected to the other element or intervening elements may also be present. In contrast, when an element is referred to as being "directly connected to" another element, no intervening elements are present. In addition, unless explicitly described to the contrary, the word "comprise" and variations such as "comprises" or "comprising," will be understood to imply the inclusion of stated elements but not the exclusion of any other elements. Meanwhile, other expressions describing relationships between components such as "∼ between", "immediately ∼ between" or "adjacent to ∼" and "directly adjacent to ∼" may be construed similarly.

Singular forms "a", "an" and "the" in the present disclosure are intended to include the plural forms as well, unless the context clearly indicates otherwise. It will be further understood that terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

The present invention may be implemented as machine-readable codes on a machine-readable medium. The machine-readable medium includes any type of recording device for storing machine-readable data. Examples of the machine-readable recording medium include a read-only memory (ROM), a random access memory (RAM), a compact disk-read only memory (CD-ROM), a magnetic tape, a floppy disk, and optical data storage. The medium may also be carrier waves (e.g., Internet transmission). The computer-readable recording medium may be distributed among networked machine systems which store and execute machine-readable codes in a de-centralized manner.

The terms used in the present application are merely used to describe particular embodiments, and are not intended to limit the present invention. Unless otherwise defined, all terms used herein, including technical or scientific terms, have the same meanings as those generally understood by those with ordinary knowledge in the field of art to which the present invention belongs. Such terms as those defined in a generally used dictionary are to be interpreted to have the meanings equal to the contextual meanings in the relevant field of art, and are not to be interpreted to have ideal or excessively formal meanings unless clearly defined in the present application.

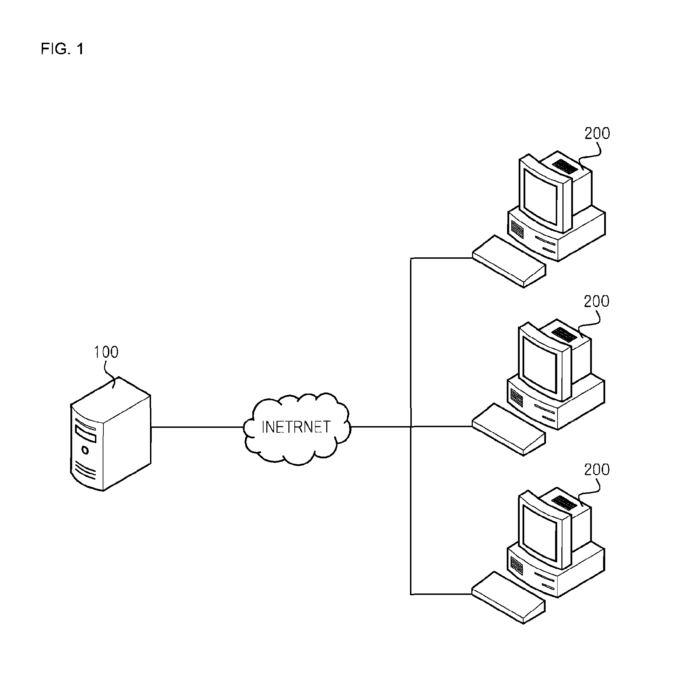

FIG. 1 is a diagram illustrating an online game providing server and a game client according to an example embodiment of the present invention.

An online game providing server 100 (hereinafter, referred to as game providing server) may simultaneously provide an online game to at least one users (game client) through an online network environment. In described technology, the online game providing server 100 corresponds to a logical unit of a server providing an online game and is not physically limited to a single computing device. For example, the online game providing server 100 may be implemented as a single server group configured to a plurality of physical server device or a plurality of computing device performing a distributed processing.

In described technology, an online game being provided by the online game providing server 100 may correspond to an online game based on multi-users.

In described technology, the online game being provided by the game providing server 100 may not be limited to a specific type game. That is, the online game may use a virtual character and an item being applied to the virtual character but may not limit a specific type game. For example, the online game may be applied to various kinds of online games such as MORPG(Multiplayer Online Role Playing Game), MMORPG(Massive Multiplayer Online Role Playing Game), sports online games, FPS(First-Person Shooting) and TPF(Third-Person Shooting).

The game providing server 100 may perform real time data exchange with a game client 200 for providing the online game.

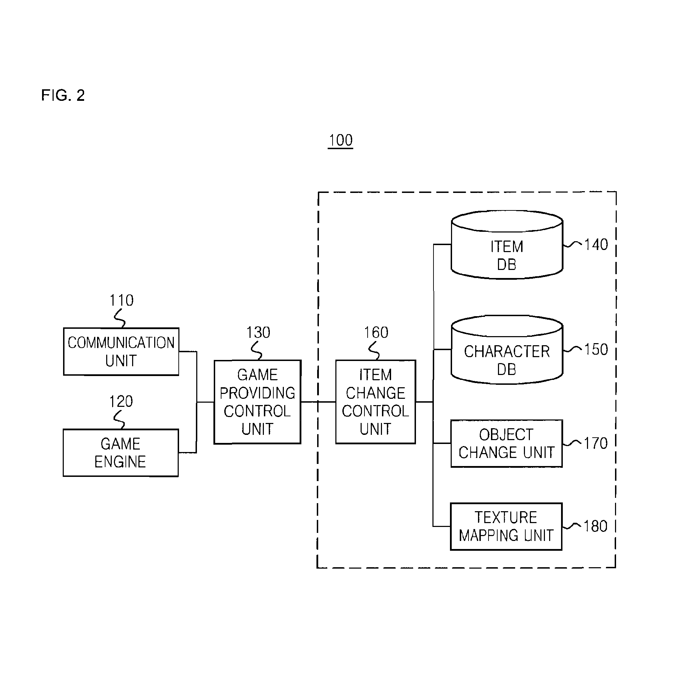

The game providing server 100 may change the item appearance being applied to the virtual character being provided in a game according to a user's input. The game providing server 100 will be illustrated in FIG. 2 through FIG. 3.

The game client 200 corresponds to a game providing means being operated in a user terminal. The user terminal may correspond to a terminal equipping a central processing unit, a storage unit and a input-output unit like a PC, a tablet PC and a smart phone.

The game client 200 may perform a communication with the game providing server 100 to provide the online game to the user. According to one embodiment, the game client 200 may load at least part of game engines for a game operation. For example, at least part of specific calculations for providing the online game may be performed on the game client 200 for a quick processing.

The game client 200 may provide an item editing means being provided from the game providing server 100 to a user to generate a change request of the item (hereinafter, referred to as change information) and to provide the change information.

In one embodiment, the game client 200 may display a changed item appearance or a virtual character wearing the changed item or an motion of the virtual character being provided from the game providing server 100 to display a changed item to the user according to the change information.

FIG. 2 is a block diagram illustrating one embodiment of an online game providing server.

Referring to FIG. 2, the game providing server 100 may include a communication unit 110, a game engine 120, a game providing control unit 130, an item database 140, a character database 150, an object change unit 170, a texture mapping unit 180 and an item change control unit 160.

The communication unit 110 may set or maintain a communication environment for the game client 200 and a game provision according to control of the game providing control unit 130.

The communication unit 110 may directly control the item change control unit 160 to perform a communication with the game client 200 according to the control of the game providing control unit 160.

The game engine 120 corresponds to a component for a game operation and may be connected with the game client 200 to provide the online game to a user. In the disclosed embodiments, the game engine 120 may be separately implemented with the game providing control unit 130 or be integrated into the game providing control unit 130.

In one embodiment, at least part of the game engine 120 may be loaded into the game client 200.

The game providing control unit 130 may control different components of the game providing server 100 to provide the online game.

The game providing control unit 130 may receive a request or data related with a change for the item appearance among online game contents to provide a corresponding request or data to the item change control unit 160. That is, the item change control unit 160 controls and performs a specific procedure related with the change for the item appearance.

In one embodiment, for convenience's sake, FIG. 2 represents the game providing control unit 130 as a separate component that is differentiated with the item change control unit 160. However, the game providing control unit 130 and the item change control unit 160 are integrated such that this embodiment should not be used for limiting the claim scope.

The item database 140 may store appearance information for a plurality of items being provided from the online game and being worn by the virtual character.

In one embodiment, the item database 140 may classify the plurality of items as a predetermined group to store appearance information for the classified items. For example, the item database 140 may classify a hat, a helmet and a headpiece being worn by a head as one group and gloves and gauntlets as another group.

The character database 150 may store information for the virtual character.

In one embodiment, the character database 150 may store appearance information for the virtual character. In more detail, the character database 150 information for an appearance object and an texture being mapped in the appearance object for displaying the virtual character.

In one embodiment, the character database 150 may store information for a motion of the virtual character. For example, the character database 150 may store information for a series of predetermined motions like a gymnastics motion of the virtual character.

The item change control unit 160 may control the item database 140, the character database 150, the object change unit 170 and the texture mapping unit 180 to provide a function of the change for the item appearance.

The item change control unit 160 may provide an appearance editing means changing the item appearance to the game client 200. For example, the appearance editing means may include an item selection interface, a display interface displaying the item and an editing interface changing the displayed item appearance.

In one embodiment, the appearance editing means may include at least one of a cutting module, a length change module and an adjustment module to provide the editing interface. Herein, the cutting module may correspond to a module cutting at least area of the appearance of the at least one item and the length change module may correspond to a module shortening or lengthening at least area of the appearance of the at least one item in a uniform proportion. The adjustment module may correspond to a module adjusting at least area of the appearance of the at least one item into a specific shape.

In one embodiment, the appearance editing means may provide change information for a changed item appearance to the game providing server 100 to receive information for the item being changed to appearance. In one embodiment, the appearance editing means may continuously provide the change information. That is, when the user shortens a horizontal length and overall lengthens vertical length, the appearance editing means may display the changed item information based on the provided change information for shortening the horizontal length to provide change information lengthening the vertical length. In another embodiment, the appearance editing means may group the change requests as batch type to provide the change information.

In one embodiment, the item change control unit 160 may control the object change unit 170 and the texture mapping unit 180 based on the received change information to change the item appearance and to provide a result for the changing the item appearance to the game client 200.

In another embodiment, the item change control unit 160 may classify the received change information as change related with an object and a texture to provide classified information to the object change unit 170 and the texture mapping unit 180 and then the item change control unit 160 may change the item appearance to provide result for changing the item appearance to the game client 200.

In one embodiment, the item change control unit 160 may determine whether the reconfigured at least one item is overlapped with at least part of appearance object according to the change appearance and if then, the item change control unit 160 may recover the reconfigured appearance to a original appearance. Herein, otherwise, the item change control unit 160 may perform a texture mapping on the reconfigured at least one item appearance before appearance of the virtual character to display the appearance wearing the item.

The item change control unit 160 may reconfigure a specific item appearance according to the change information.

In one embodiment, the item change control unit 160 may assign a drawing effect based on a center of a specific point. For example, when the change information includes a request for the drawing effect based on a center of a specific point, the item change control unit 160 may control the object change unit 170 for assigning the drawing effect based on a center of a specific point to change an appearance object of a corresponding item. The item change control unit 160 may control the texture mapping unit 180 to re-map the texture the corresponding item based on the changed appearance object,

In one embodiment, the item change control unit 160 may adjust the item appearance to a specific shape. For example, the item change control unit 160 whether the change information includes a adjusting request for the specific shape for the item by the adjustment module. When the change information includes the adjusting request, the item change control unit 160 may request changing at least part of the appearance object of the corresponding item for matching with at least part of the specific shape to the object change unit 170. The item change control unit 160 may control the texture mapping unit 180 to re-map the texture of the corresponding item based on the changed appearance object.

In one embodiment, the item change control unit 160 may change a length of the item appearance. Herein, a length change corresponds to lengthening or shortening a length based on a previous proportion. For example, the item change control unit 160 may check whether the change information includes a length change request for the item by the length change module. When the change information includes the length change request, the item change control unit 160 may require shortening or lengthening the object appearance with a uniform proportion along the length change direction to the object change unit 170 according to the length change request. The item change control unit 160 may shorten or lengthen an item texture with a uniform proportion through the texture mapping unit 180 and may re-map the changed item texture to the shortened or lengthened appearance object.

In one embodiment, the item change control unit 160 may cut at least part of item appearance. For example, the item change control unit 160 may check whether the change information includes a cut request for the item by the cutting module and if then, the item change control unit 160 may require removing the at least part appearance object of the item to the object change unit 170 according to the cut request. The item change control unit 160 may use the texture mapping unit 180 to re-map the texture of the item in the cut appearance object.

The item change control unit 160 may perform an overlap processing according to a predetermined rule when at least two item appearances is overlapped with each other. In more detail, the item change control unit 160 may use the item database 140 or the character database 150 to check the virtual character related with the game client 200 and appearance information of the plurality of items being applied to the virtual character. The item change control unit 160 may compare the appearance object of the plurality of items and the texture being mapped in the appearance object based on the checked appearance information to check whether an mutual overlapping area exists. When the mutual overlapping area exists, the item change control unit 160 may check a priority for at least two items related with the mutual overlapping area and may selectively display the appearance object of a high priority item and a texture being mapped in the item or preferentially display the specific item appearance.

In one embodiment, the item change control unit 160 may display only one item appearance for mutually exclusive items. For example, whether at least two items related with the overlapping area corresponds to a mutually exclusive relation and if then, the item change control unit 160 may receive information for a selected first item in at least two items form the game client 200. The item change control unit 160 may display an appearance object for the first item and a texture being mapped in the appearance object on the virtual character and may remove a display for other item except for the first item.

In one embodiment, the item change control unit 160 may display only the high priority appearance for the overlapping area. For example, the item change control unit 160 may display the high priority appearance object and the texture being mapped in the appearance object for the overlapping area. The item change control unit 160 may display a low priority appearance object and the texture being mapped in the appearance object for area except for the overlapping area and may remove a display for the low priority appearance object or the texture being mapped in the appearance object for the overlapping area.

The item change control unit 160 may simultaneously perform a change procedure of the specific item and an overlapping procedure of the plurality of items.

The object change unit 170 may change an appearance object among appearance information of the item. For example, the object change unit 170 may cut an item appearance, change an item length, change an item width, draw an item to a specific point or fit an item to a specific shape according to a request being included in the change information.

In one embodiment, the object change unit 170 may include an editing module corresponding the editing means. For example, the object change unit 170 may include at least of the cutting module cutting at least area of the appearance of the at least one item, the length change module shortening or lengthening at least area of the appearance of the at least one item in a uniform proportion and the adjustment module adjusting at least area of the appearance of the at least one item into a specific shape.

The texture mapping unit 180 may map the texture in the appearance object of the item.

In one embodiment, the texture mapping unit 180 may lengthen or shorten the texture based on the changed appearance object of the item to perform the texture. For example, when the editing module cuts the item, the texture mapping unit 180 may re-map only remaining area. For another example, when the editing module lengthens the item, the texture mapping unit 180 may re-map based on the overall lengthened proportion.

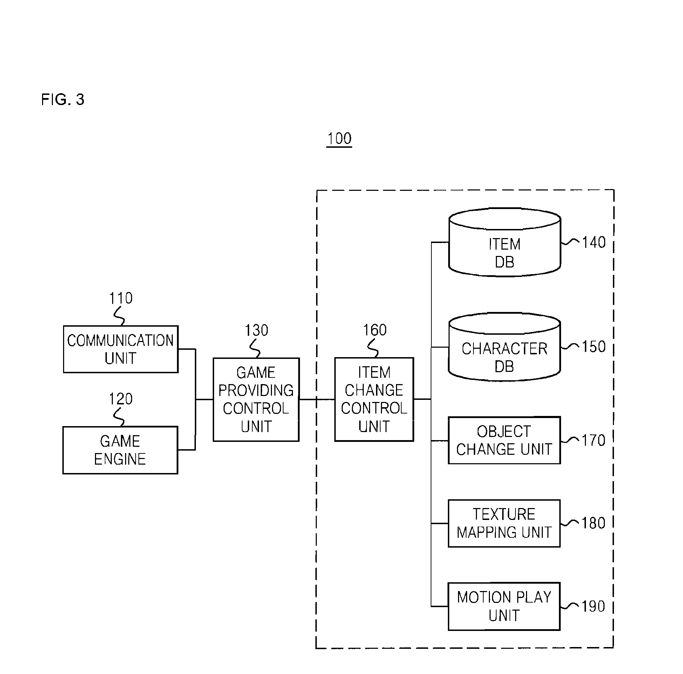

FIG. 3 is a diagram illustrating another embodiment of an online game providing server. Another embodiment illustrated in FIG. 3 may further include a motion play unit 190 for one embodiment illustrated in FIG. 2. These embodiments are also performed in the game providing server 100 and substantially equivalent components or procedures will be omitted. However, this omission should be understood to a person of ordinary skill in the art and should not limit the claim scope.

The game providing server 100 may further include the motion play unit 190.

The motion play unit 190 may perform a predetermined motion on the virtual character based on character information being stored in the character database 150. For example, the motion play unit 190 may perform the predetermined motion like a gymnastics motion, a jump motion and a greeting motion on a specific virtual character.

In one embodiment, the motion play unit 190 may perform the predetermined motion on a virtual character wearing the item being provided from the item change control unit 160. The item change control unit 160 may provide the motion being generated by the motion play unit 190 to the game client 200 to display. This procedure is performed in order to checking whether the virtual character and the item appearance is mutually overlapped or is broken when the predetermined motion is performed.

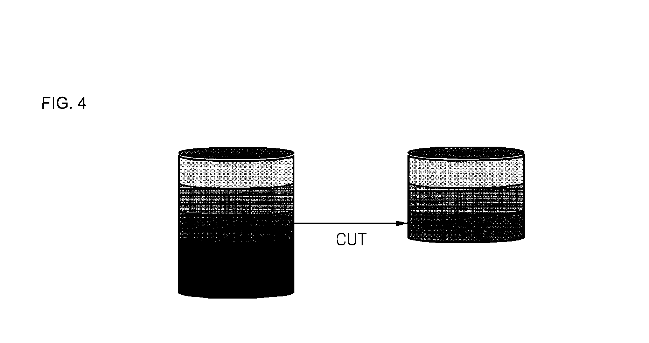

FIG. 4 through FIG. 11 are diagrams illustrating various item editing procedures and various item editing effects.

FIG. 4 illustrate one embodiment cutting at least part item. In FIG. 4, the game providing server 100 may perform cutting the at least part item according to the change information.

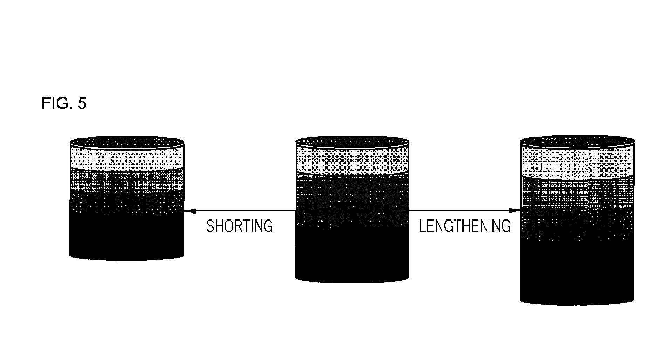

FIG. 5 illustrate one embodiment shortening or lengthening the item. In FIG. 5, the game providing server 100 may shorten or lengthen with a uniform proportion for the item according to the change information. That is, the game providing server 100 shortens or lengthens the appearance object and the texture in the uniform proportion to perform the texture re-mapping. This procedure is perform in order.

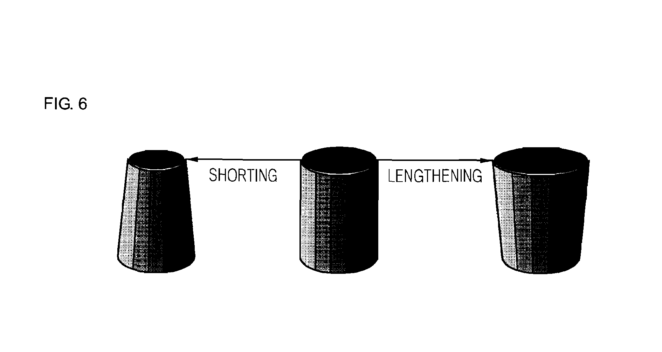

FIG. 6 illustrate one embodiment shortening or lengthening at least part item thickness. In FIG. 6, the game providing server 100 may decrease or increase for the at least part item thickness in a uniform proportion according to the change information. That is, the game providing server 100 may perform increasing or decreasing the at least part appearance object and texture and the texture re-mapping in order in the uniform proportion to perform shortening or lengthening the item.

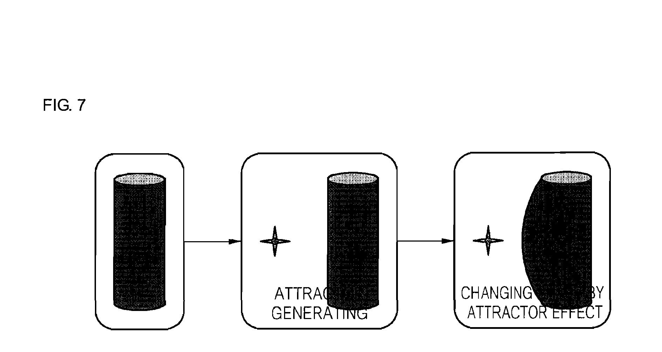

FIG. 7 illustrate one embodiment drawing the item (i.e., drawing effect) based on a specific point. The game providing server 100 may generate the specific point according to the change information and may assign the drawing effect a center of the specific point to change the item appearance like FIG. 7.

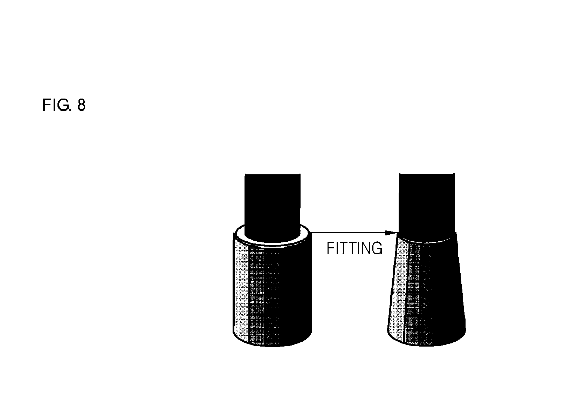

FIG. 8 illustrate one embodiment fitting the item. In FIG. 8, the game providing server 100 may change the item appearance for fitting at least part item to a corresponding specific shape based on the specific shape according to the change information.

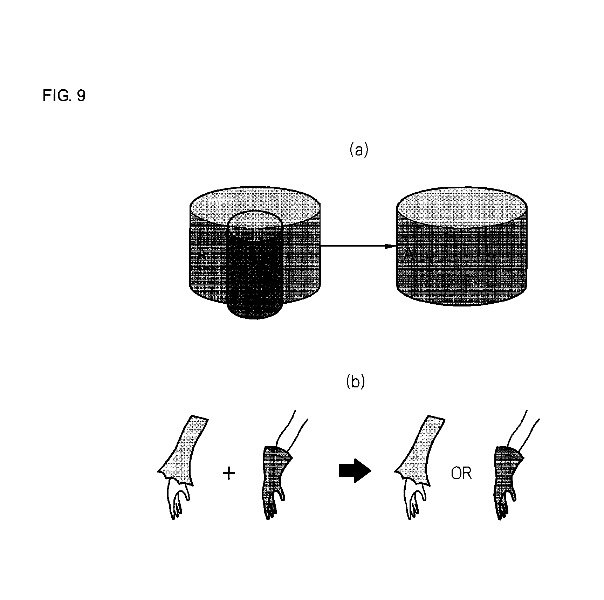

FIG. 9 illustrate one embodiment processing mutual exclusively overlapping. When A and B is different with each other, at least part of A and B may be overlapped and when A and B is mutually exclusive, one of A and B may be displayed like FIG. 9(a). For example, when A corresponds to a sleeves and B corresponds to gloves, only sleeves or gloves is displayed like FIG. 9 (b).

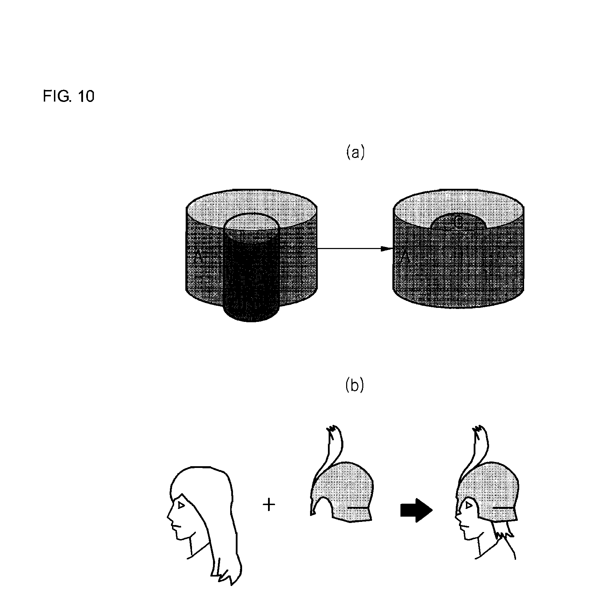

FIG. 10 illustrate one embodiment processing selectively overlapping. When A and B is different with each other, at least part of A and B may be overlapped and when A and B correspond to a selective and preferential relation, overlapping area may display a high priority of one of A and B and the other area may display all of A and B like FIG. 10 (a). For example, when a headpiece corresponds to the high priority of item, the headpiece is displayed on the appearance of the virtual character like FIG. 10 (b).

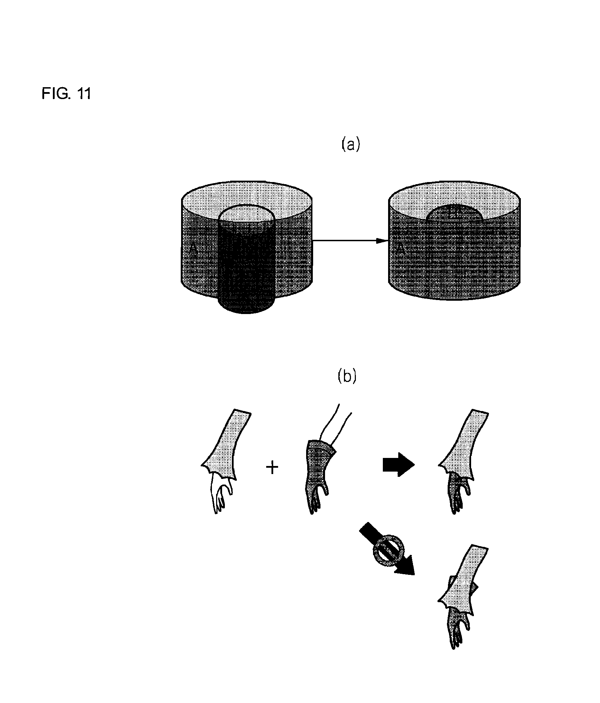

FIG. 11 illustrate one embodiment processing assigning the priority to selectively clip for the overlapping area. When at least part of A and B is overlapped and A and B is mutually exclusive, one of A and B may be display and at least part of a low priority of item may be removed like FIG. 11 (a). For example, at least part glove is not displayed on outside of a sleeve.

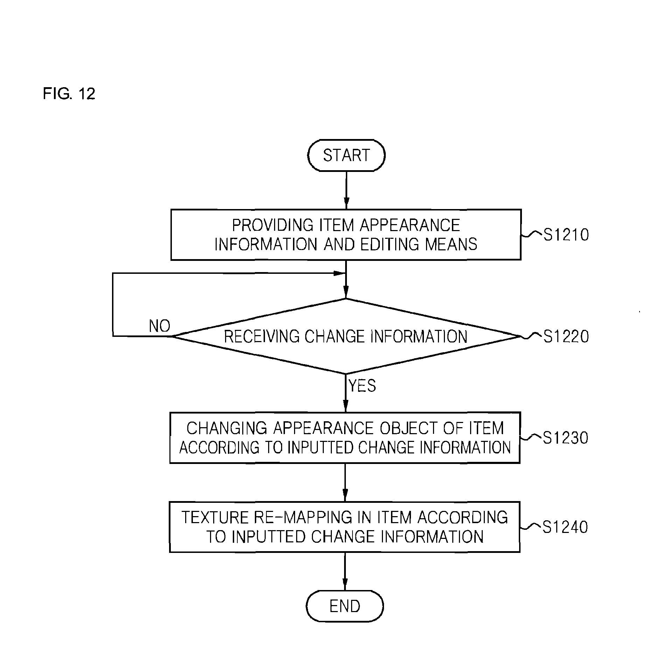

Hereinafter, FIG. 12 through FIG. 14 illustrate various embodiments of the online game providing method. These embodiments are also performed in the game providing server 100 and substantially equivalent components or procedures will be omitted. However, this omission should be understood to a person of ordinary skill in the art and should not limit the claim scope.

FIG. 12 is a flowchart illustrating one embodiment of an online game providing method. One embodiment of the online game providing method disclosed in FIG. 12 corresponds to embodiment reconfiguring the texture or texture re-mapping according to the change information.

Referring to FIG. 12, the game providing server 100 may provide the appearance information for the at least one item and the editing means for the item appearance to the game client 100 (Step S1210).

When the game providing server 100 receives the change information through the editing means (Step S1220), the game providing server 100 may change the appearance object of the at least one item according to the change information (Step S1230) or re-mapping the texture being mapped in the appearance object to reconfigure the appearance of the at least one item (Step S1240).

In one embodiment, the editing means may include at least of the cutting module removing at least area of the appearance of the at least one item, the length change module shortening or lengthening at least area of the appearance of the at least one item in a uniform proportion and the adjustment module adjusting at least area of the appearance of the at least one item into a specific shape.

In one embodiment for Steps S1230 through S1240, when the change information includes a request for the drawing effect being applied to a center of a specific point, the game providing server 100 may assign the drawing effect based on a center of a specific point to change the appearance object of a corresponding item and may re-map the texture of the corresponding item in the changed appearance object.

In one embodiment for Steps S1230 through S1240, the game providing server 100 checks whether the change information includes a adjusting request for a specific shape of an item by the adjustment module and if then, may change the at least part appearance object of the corresponding item being mapped in at least part specific shape. The game providing server 100 may re-map the texture of the corresponding item based on the changed appearance object.

In one embodiment for Steps S1230 through S1240, the game providing server 100 checks whether the change information includes a length change request of the item by the length change module and if then, may shorten or lengthen the appearance object of the corresponding item with a uniform proportion according to the length change request. The game providing server 100 may shorten or lengthen the texture of the item in the uniform proportion and may re-map the changed texture in the shortened and lengthened appearance object.

In one embodiment for Steps S1230 through S1240, the game providing server 100 checks whether the change information includes a cut request for the item by the cutting module and if then, may remove at least part appearance object of an item according to the cut request. The game providing server 100 may re-map the texture of the item in the cut appearance object.

In one embodiment, the game providing server 100 determines whether the at least one item reconfigured according to the change information overlaps at least area of the appearance object of the virtual character and if then, may recover the reconfigured appearance to an original appearance. Herein, otherwise, the game providing server 100 may map an appearance of the reconfigured at least one item and an appearance of the virtual character in order.

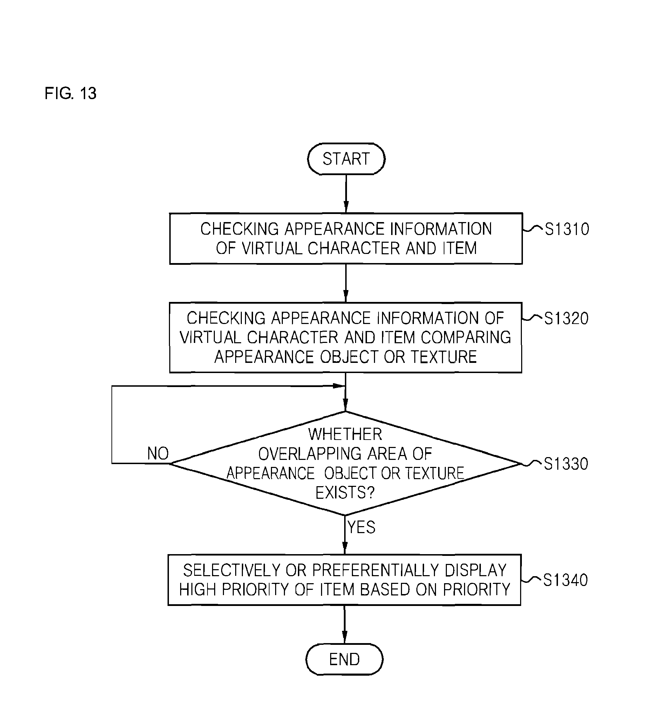

FIG. 13 is a flowchart illustrating another embodiment of an online game providing method. Another embodiment of the online game providing method disclosed in FIG. 13 corresponds to embodiment performing an overlapping processing to a plurality of items.

Referring to FIG. 13, another embodiment for the online game providing method is described in detail. The game providing server 100 may check appearance information for the game client and the plurality of items being applied to the virtual character (Step S1310).

The game providing server 100 may compare the appearance object of the plurality of items or the texture being mapped in the appearance object based on the checked appearance information (Step S1320) to check whether a mutually overlapping area exists (Step S1330).

When the overlapping area exists (Step S1330), the game providing server 100 may selectively or preferentially display an appearance object of a high priority of item or a texture being mapped in the appearance object based on a priority related with at least two items (Step S1340).

In one embodiment for Step S 1340, when at least two items related with the overlapping area is mutually exclusive, the game providing server 100 may receive information for a selected first item of at least two items from the game client 200. The game providing server 100 may remove a display for other item of the at least two items except for the first item.

In one embodiment for Step S 1340, the game providing server 100 may display an appearance object of the high priority of item and a texture being mapped in the appearance object for the overlapping area and may remove a display for an appearance object of a low priority of item and a texture being mapped in the appearance object for an area except for the overlapping area.

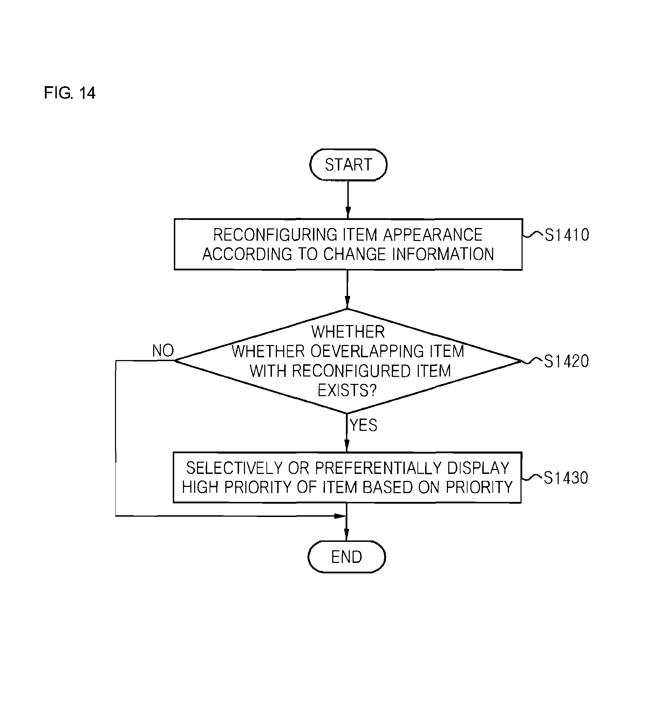

FIG. 14 is a flowchart illustrating the other embodiment of an online game providing method. The other embodiment of the online game providing method disclosed in FIG. 14 corresponds to embodiment performing changing the item appearance and overlapping the plurality of items.

The other embodiment of the online game providing method disclosed in FIG. 14 and more particularly, the game providing server 100 may change the appearance object of the at least on first item or may re-map a texture being mapped in the appearance object according to appearance information received at least one first item from the game client 200 to reconfigure an appearance of the at least one first item (Step S1310).

The game providing server 100 may check whether at least one second item being overlapped with the reconfigured appearance of the at least one first item exists (Step S1320) and if then (Step S1320), may selectively or preferentially display the appearance object of the high priority of item or the texture being mapped in the appearance object based on a priority of the at least one first and second item (Step S1330).

In one embodiment, the game providing server 100 may determine whether at least one of the first or second item overlaps at least part appearance object of the virtual character and if then, may recover the reconfigured appearance to an original appearance.

In one embodiment for Step S 1410, the game providing server 100 may provide the editing means for an item appearance to the game client 200 and may receive the change information through the editing means. Herein, the editing means may include a cutting module cutting at least area of the appearance of the at least one item, a length change module shortening or lengthening at least area of the appearance of the at least one item in a uniform proportion and an adjustment module adjusting at least area of the appearance of the at least one item into a specific shape.

In one embodiment, the game providing server 100 may apply the changed item appearance and may provide the specific motion through playing a specific motion to the virtual character being applied to the item appearance by Steps S1410 through S1430.

Although this document provides descriptions of preferred embodiments of the present invention, it would be understood by those skilled in the art that the present invention can be modified or changed in various ways without departing from the technical principles and scope defined by the appended claims.

## Claims

1. An online game providing method being performed by an online game providing server, the online game providing server being coupled at least one game client through a network and providing an online game based on a virtual character and an item being applied to the virtual character to the at least one game client, the online game providing method comprising:
(a) providing appearance information for at least one item and editing means for the at least one item to a first game client; and
(b) reconfiguring an appearance of the at least one item by changing an appearance object of the at least one item or re-mapping texture of the appearance object according to change information received through the editing means.

2. The online game providing method of claim 1, wherein the editing means includes
a cutting module configured to cut at least area of the appearance of the at least one item;
a length change module configured to shorten or lengthen at least area of the appearance of the at least one item in a uniform proportion; and
an adjustment module configured to adjust at least area of the appearance of the at least one item into a specific shape.

3. The on line game providing method of claim 1, wherein the step (b) includes
assigning a drawing effect based on a center of a specific point to change an appearance object of a corresponding item when the change information including the drawing effect based on the center of the specific effect is requested; and
re-mapping a texture of the corresponding item based on the changed appearance object of the corresponding item.

4. The online game providing method of claim 2, wherein the step (b) includes
checking whether the change information includes a adjusting request for a specific shape of the at least one item through the adjustment module;
changing the appearance object of a corresponding item such that the changed appearance object is mapped with at least of the specific shape when the change information includes the adjusting request for the specific shape; and
re-mapping a texture of the corresponding item based on the changed appearance object.

5. The online game providing method of claim 1, wherein the step (b) includes
checking whether the change information includes a length change request for the at least one item requested by the length change module;
shortening or lengthening the appearance object of the at least one item with a uniform proportion along a length change direction according to the length change request when the change information includes the length change request; and
adjusting the texture of the at least one item through shortening or lengthening the appearance object with the uniform proportion and re-mapping the changed texture for the shortened or lengthened appearance object.

6. The online game providing method of claim 2, wherein the step (b) includes
checking whether the change information includes a cut request for the at least one item request by the cutting module;
removing at least area of the appearance object of the at least one item according to the cut request when the change information includes the cut request; and
re-mapping a texture of the at least one item for the cut appearance object.

7. The online game providing method of claim 1, further comprising
(c) determining whether at least one item reconfigured according to the change information overlaps at least area of the appearance object of the virtual character and if then, recovering the reconfigured appearance to an original appearance.

8. The online game providing method of claim 7, wherein the step (c) includes
otherwise, texture-mapping an appearance of the reconfigured at least one item and an appearance of the virtual character in order.

9. The online game providing method of claim 7, wherein the step (c) further includes
selectively or preferentially displaying the appearance object of a high priority item or a texture being mapped in the appearance object based on a priority for at least two items related with the overlapping area when the mutually overlapping area exists.

10. The online game providing method of claim 9, wherein the step (c) includes
displaying the appearance object of the high priority item and the texture being mapped in the appearance object for the overlapping area;
displaying an appearance object of a low priority item and a texture being mapped in the appearance object for an area without overlapping; and
removing a display for an appearance object of a low priority item and a texture being mapped in the appearance object for the overlapping area.

11. An online game providing server providing an online game, the online game providing server being coupled at least one game client through a network and providing an online game based on a virtual character and an item being applied to the virtual character to the at least one game client, the online game providing server comprising:
an item database configured to store appearance information for a plurality of items being worn by the virtual character;
an object change unit configured to change an appearance object of the specific item according to the change information received from the at least one game client; and
an appearance changing control unit configured to provide an appearance editing means changing the appearance of the at least one item to the at least one game client and to provide the inputted change information to the object change unit through the appearance editing means.

12. The online game providing server of claim 11, wherein the object change unit includes
a cutting module configured to cut at least area of the appearance of the specific item;
a length change module configured to shorten or lengthen at least area of the appearance of the item in a uniform proportion; and
an adjustment module configured to adjust at least area of the appearance of the item into a specific shape.

13. The online game providing server of claim 12, further comprising
a texture mapping unit configured to increase or decrease to re-map according to the changed appearance object.

14. The online game providing server of claim 13, wherein the appearance change control unit includes
providing the change information to the object change unit or texture mapping unit to change the appearance of the specific item and providing appearance information of the changed item through the appearance editing means to the at least one game client.

15. In a storage medium recording a program for performing an online game providing method, the program being coupled at least one game client through a network and providing an online game based on a virtual character to the coupled at least one client, the program comprising:
(a) a function of providing an editing means for appearance information of at least one item selected by a first game client and an appearance of the at least one item;
(b) a function of changing the appearance object of the at least one item according to change information received through the editing means or re-mapping a texture being re-mapped the appearance object to reconfigure the appearance of the at least one item.
